## Europäisches Patentamt

## European Patent Office

## Office européen des brevets

(11) Numéro de publication: **0 202 982**
**B1**

(12) ## FASCICULE DE BREVET EUROPEEN

(45) Date de publication du fascicule du brevet:
**01.08.90**

(51) Int. Cl.⁵: **B29C 67/22, B29C 47/90**

(21) Numéro de dépôt: **86400830.5**

(22) Date de dépôt: **17.04.86**

(54) **Dispositif d'extrusion de matières plastiques expansibles.**

(30) Priorité: **23.04.85 FR 8506120**

(43) Date de publication de la demande:
**26.11.86 Bulletin 86/48**

(45) Mention de la délivrance du brevet:
**01.08.90 Bulletin 90/31**

(84) Etats contractants désignés:
**AT BE CH DE FR GB IT LI LU NL SE**

(56) Documents cités:
**FR-A- 1 259 717**
**FR-A- 1 498 620**
**FR-A- 1 545 573**
**FR-A- 2 063 589**
**US-A- 1 766 638**
**US-A- 4 154 785**

**PLASTVERARBEITER,**
**vol. 19, août 1968, pages 635-640; H.O. SCHIEDRUM et al.: "Profilwerkzeuge und -anlagen für das Extrudieren von thermoplastischen Kunststoffen"**

(73) Titulaire: **ATOCHEM, 4 & 8, Cours Michelet La Défense 10, F-92800 Puteaux(FR)**

(72) Inventeur: **Jentet, Pierre, 4 bis Allée FL Schmitt, F-92210 Saint-Cloud(FR)**

(74) Mandataire: **Foiret, Claude et al, ATOCHEM Département Propriété Industrielle, F-92091 Paris la Défense 10 Cédex 42(FR)**

## Description

La présente invention concerne un dispositif d'extrusion de matières plastiques expansibles permettant d'extruder une composition à l'état au moins incomplètement expansé à travers une section de filière de surface sensiblement égale à celle de l'entrée du conformateur chargé de définir la forme et les dimensions du profilé final à obtenir, ledit conformateur présentant sensiblement la forme de la filière, correspondant au préambule de la revendication 1.

Il est connu d'extruder des matières plastiques non expansibles à travers des dispositifs constitués de filière et de conformateur. Tel est le cas dans PLASTVERARBEITER, vol. 19, Août 1968, pages 635–640. Le dispositif décrit est constitué d'une filière et d'un conformateur divisé en deux parties à travers lesquelles circule le thermoplastique. Le conformateur, dans ce cas divisé en deux parties éloignées l'une de l'autre, est formé dans sa première partie, la plus proche de la filière, d'un mini conformateur de diamètre en entrée sensiblement identique à celui de la filière et taillé en biseau de façon à ce que le diamètre de sortie soit supérieur à celui d'entrée et supérieur à celui d'entrée de la seconde partie du conformateur. Cette différence de section n'a pas d'influence sensible dans le cas de l'extrusion de produit non expansible. Dans le cas de l'extrusion de matières plastiques expansibles un tel dispositif ne peut être utilisable. Du fait du premier conformateur biseauté l'expansion est orientée vers l'extérieur et, en sortie, le profilé de section supérieure à celle d'entrée de la seconde partie du conformateur ne peut y entrer sans destruction de la surface dudit profilé.

Par contre, la fabrication en continu d'un profilé de contour précis composé d'une âme expansée et d'une couche extérieure non expansée peut être obtenue par le passage d'une matière thermoplastique expansible au travers d'une filière totalement ou en partie annulaire suivie d'une rigidification rapide de la couche extérieure de la paraison au moyen d'un conformateur refroidi de même section de passage que la sortie extérieure de passage de la filière, placé au voisinage immédiat de la sortie de filière, coaxial avec celle-ci; l'expansion de la matière se réalise uniquement vers l'intérieur du profilé, qu'elle remplit plus ou moins totalement. Cette technique est décrite dans les brevets français 1 498 620 et 2 063 589.

Dans le pratique, l'écart entre filière et conformateur, variant de 0 à quelques millimètres habituellement de 5 à 20, est ajusté par l'utilisateur, selon la section du profilé à réaliser et les formulations thermoplastiques expansibles, de manière à permettre un éventuel léger désalignment du conformateur par rapport à la filière sans toutefois permettre l'expansion de la paraison vers l'extérieur à sa sortie de la filière, qui occasionnerait, au mieux une dégradation de l'état de surface du profilé, au pire un risque de blocage de la paraison avant son entrée dans le conformateur, conduisant à la rupture du profilé.

Il est difficile d'obtenir un alignement parfait du conformateur avec la filière car cette dernière est solidaire de la machine d'extrusion alors que le conformateur est en général fixé sur un support placé en face de la machine et fixé au sol ou sur des rails. De plus, sous l'action des forces exercées par le tirage du profilé et son frottement dans le conformateur, l'alignement initial du conformateur avec la filière peut être modifié au cours de la fabrication, occasionner des ruptures du profilé, donc des arrêts de production préjudiciables à la productivité de la machine.

Le dispositif objet de la présente invention, en remédiant à ces inconvénients, permet de fabriquer aisément des profilés massifs ou creux en matières plastiques allégées, de section quelconque en forme et en dimensions, présentant un profil parfaitement défini et constant sur toute la longueur.

Un autre but du dispositif de l'invention est d'améliorer l'obtention de profilés massifs ou creux en matière plastique à âme allégée présentant une surface dense due à la formation, tant sur la surface externe de ces profilés que dans le cas de profilés creux du type tubulaire sur leur surface interne, d'une peau continue de densité sensiblement voisine de celle du matériau plastique de base non expansé. En particulier, il a pour but de faciliter le démarrage de fabrications de tels profilés.

Un autre but est de diminuer fortement, voire d'éliminer complètement les risques de rupture du profilé en cours d'extrusion dûs à un désalignement du système de réception par rapport à la filière.

Un autre but est de permettre une meilleure maîtrise du rapport des masses expansées et non expansées du profilé.

Un autre but est encore d'obtenir à volonté un profilé plus ou moins lisse en interdisant complètement ou, au contraire, en permettant une explosion plus ou moins accentuée de la matière en surface. Une surface sans aucune trace d'expansion apporte une imperméabilité accure, une moindre rétention des poussières, une réflection plus importante des moyens lumineux, partant une meilleure tenue des profilés exposés à l'extérieur ainsi que la possibilité d'obtenir des coloris plus profonds. A l'opposé, une surface plus rugueuse présente un aspect satiné pouvant paraître plus uniforme sur l'ensemble du pourtour du profilé, peut représenter une ressemblance plus grande avec des matériaux naturels tels que le bois et facilite certains traitements de surface ultérieurs des profilés tels que peinture, patinage.

Le dispositif conforme à l'invention permet fondamentalement d'extruder une composition de matière plastique expansible, à l'état au moins incomplètement expansé, à travers une section de filière de surface sensiblement égale à celle de l'entrée du conformateur chargé de définir la forme et les dimensions du profilé final à obtenir et présentant sensiblement la forme de cette dernière, en ménageant un espace vide de matière à l'intérieur du profilé en cours d'extrusion à travers ladite section, puis à contraindre la matière ainsi extrudée, immédiatement à la sortie de ladite section de filière et sensiblement dans le prolongemet de l'axe d'extrusion, dans un espace de conformation allongé et refroidi, ouvert à ses deux extrémités sur ledit axe d'extrusion et présentant une section de sortie identique à celle du profilé à obtenir. (Le procédé est caractérisé en ce que.) L'espace de conformation allongé et refroidi est divisé en au moins deux parties séparées l'une de l'autre par un espace libre, la première partie n'excédant pas quelques centimètres de longueur, de préférence moins de 10 cm, est fixée directement en contact avec la sortie de la filière. Le dispositif est caractérisé en ce que la section droite de sortie de la première partie du conformateur est identique à la section droite d'entrée de la seconde partie du conformateur, ces sections correspondant sensiblement à celles du profilé à obtenir. L'écart entre les espaces de conformation, ou parties de conformateur est choisi en fonction de l'aptitude à s'expanser, à température constante, de la matière extrudée, de sa vitesse de rigidification quand la température décroit, des valeurs de températures et de vitesses d'extrusion choisies, de la section du profilé à obtenir ainsi que des éléments de la formulation employés tels que: nature du polymère, lubrifiants internes, externes. Dans le cas où, par exemple, l'extrusion est lente et l'expansion de la matière rapide, le blocage du contour du profilé peut être obtenu par une première partie de conformateur assez courte; l'écart entre la première et la deuxième partie du conformateur peut être choisi assez librement en fonction de l'état de surface désiré pour le profilé ainsi que de l'efficacité du système d'élimination de calories de cette partie du conformateur. Dans le cas où, par exemple, l'extrusion est rapide et le remplissage de la section du profilé lent, l'écart entre la première et la deuxième partie du conformateur devra être faible, mais la longueur de la première partie pourra être important. Habituellement l'écart entre les deux premières parties du conformateur est compris entre 2 et 10 cm.

Par l'expression "section de filière" on entend la section droite à la sortie de celle-ci, sans tenir compte de l'existence de l'espace vide créé au sein de la masse extrudée.

Par ajustement de la longueur de la première partie du conformateur, de sa température et de l'écartement entre les différentes parties du conformateur, il est possible de maîtriser l'épaisseur de la surface non expansée du profilé et/ou l'aspect de ladite surface.

Dans la première partie du conformateur, et à son contact une mince couche de matériau se rigidifie évitant pour la suite toute expansion vers l'extérieur. Dans la deuxième partie du conformateur la masse thermoplastique s'expanse vers l'intérieur tandis que se poursuit la rigidification d'une épaisseur plus ou moins importante de matière au voisinage de la paroi du conformateur.

Les avantages du dispositif sont les suivants:

– aucun espace ne séparant la filière de la première partie du conformateur, le risque de coincement de la matière entre filière et conformateur disparait,
– la première partie du conformateur étant en contact avec la filière, l'alignement des deux pièces est aisé et demeure inchangé durant toute la durée de l'extrusion,
– un léger désalignement éventuel entre cette première partie du conformateur et les suivantes peut être accepté sans risque de rupture par le profilé en formation, qui est protégé par la couche de matériau rigidifié formée dans la première partie du conformateur.

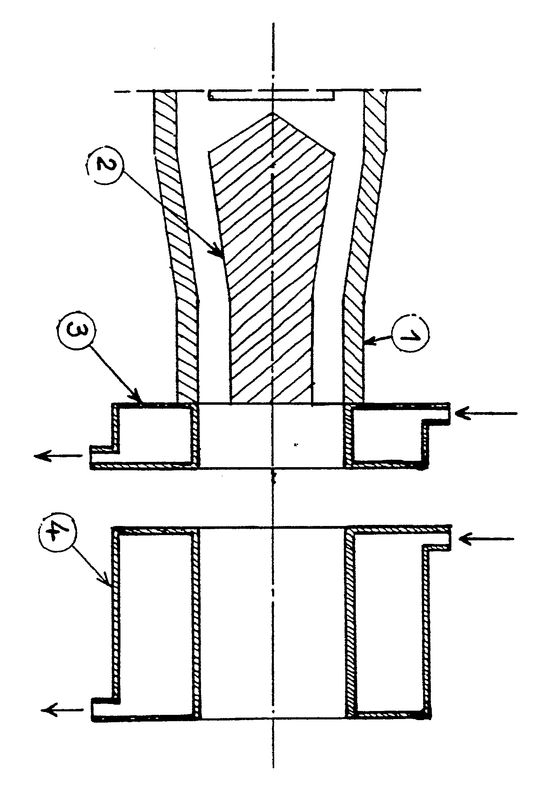

Un appareillage possédant un dispositif conforme à l'invention comprend en suivant la figure annexée une extrudeuse, non représentée, munie d'une filière (1) dans laquelle est maintenu ou ménagé un poinçon (2) retenant au maximum l'expansion de la matière et un conformateur en au moins deux parties (3) et (4). La première partie (3), munie de moyens de refroidissement, immédiatement au contact avec la sortie de la filière et placée sensiblement coaxialement avec cette dernière est représentée par une bague présentant une section droite d'entrée voisine de celle de la filière et de sortie identique à celle du profilé à obtenir. Elle est thermorégulée de manière à initier une rigidification superficielle de la matière à son contact, tout en permettant un début de remplissage de l'intérieur par expansion de la matière vers l'intérieur; elle est de préférence isolée thermiquement de l'extrémité de la filière par des moyens appropriés. La seconde partie (4), pouvant elle-même être divisée et munie également de moyens de refroidissement, séparée de la première partie par un écartement de 1 à 10 cm et placée sensiblement dans l'axe de ladite première partie est représentée par un canal dont les sections droites d'entrée et de sortie sont identiques à celle du profilé à obtenir.

La détermination des divers paramètres intervenant dans l'utilisation du dispositif conforme à l'invention est très simple pour tout homme de l'art. Elle se résume en fait, une fois fixée la formulation de la composition de matière expansible à extruder, à choisir par le calcul et/ou l'expérience les conditions, c'est-à-dire principalement la vitesse et la température de l'extrusion.

La matière plastique expansible transformée dans le dispositif conforme à l'invention peut être de tout type quelconque comme, par exemple à base de polystyrène, de polyéthylène haute ou basse densité, de polychlorure de vinyle, de compolymère acrylonitrile-butadiène-styrène (ABS), de polyamide, de polycarbonate, de polyurethane.

Les exemples suivants illustrent l'invention sans toutefois la limiter.

EXEMPLE 1

La machine employée est une extrudeuse monovis diamètre 60 mm longueur de vis 1020 mm (17 fois le diamètre). Le profilé à obtenir présente une section sensiblement rectangulaire de largeur 120 mm et d'épaisseur 18 mm comportant quatre rainures rectangulaires en relief de sorte que la section du profilé est égale à 2380 mm².

Afin de concilier la capacité de plastification de l'extrudeuse et une bonne planeité de la face non rainurée du profilé, une vitesse maximum de 70 centimètres par minute a pu être atteinte, à partir de la formule suivante:

résine polystyrène: 100
polymère agent facilitant l'extrusion: 3
lubrifiants: 0,8
agent gonflant (bicarbonate de sodium: 2

La longueur de la première partie du conformateur est égale à 25 mm et un écart égal à 80 mm existe entre la première et la deuxième partie du conformateur.

EXEMPLE 2

La machine employée est une extrudeuse double vis capable de plastifier environ 180 k/h de la matière utilisée. Le profilé à obtenir est de section carré de 50 mm de côté comportant un évidement central concentrique également carré, de 20 mm de côté; l'épaisseur du tube est de 15 mm. La section est de 2100 mm².

Afin de concilier la capacité de plastification de l'extrudeuse et une bonne conformation des angles du tube, est utilisée une conformation en plusieurs parties séparées, à partir de la deuxième, par des zones en faible dépression destinées à éviter l'effondrement du profilé, dans lesquelles, de plus, une pulvérisation d'eau est appliquée au profilé.

La formulation employée est la suivante:

résine PVC: 100
polymère agent facilitant l'extrusion: 10
stabilisant: 3
lubrifiants: 1,3
agent gonflant (azodicarbonamide): 0,7

Une vitesse d'extrusion égale à 2,5 mètres par minute peut être atteinte. Dans ce cas la longueur de la première partie du conformateur est égale à 80 mm et un écart égal à 50 mm sépare la première de la deuxième partie du conformateur.

**Revendications**

1. Dispositif d'extrusion de matières plastiques expansibles permettant d'extruder une composition à l'état au moins incomplètement expansée à travers une section de filière de surface sensiblement égale à celle de l'entrée du conformateur chargé de définir la forme et les dimensions du profilé final à obtenir et présentant sensiblement la forme de cette dernière, en ménageant un espace vide de matière à l'intérieur du profilé en cours d'extrusion à travers ladite section, puis à contraindre la matière ainsi extrudée, immédiatement à la sortie de ladite section de filière et sensiblement dans le prolongement de l'axe d'extrusion, dans un espace de conformation allongé et refroidi ouvert à ses deux extrémités sur ledit axe d'extrusion et présentant une section de sortie identique à celle du produit final à obtenir, ledit espace de conformation étant divisé en au moins deux parties séparées l'une de l'autre par un espace libre, la première partie n'excédant pas quelques centimètres de longueur et se trouvant directement en contact avec la sortie de filière caractérisé en ce que la section droite de sortie de la première partie du conformateur est identique à la section droite d'entrée de la seconde partie du conformateur, ces sections correspondant sensiblement à celle du profilé à obtenir.

2. Utilisation du dispositif de la revendication 1 pour la fabrication de profilés en matière plastique à âme allégée présentant une surface dense de densité sensiblement voisine de celle de la matière plastique de base non expansée.

**Claims**

1. A device for the extrusion of expandable plastics enabling a composition to be extruded in the at least incompletely expanded condition through a die section of surface substantially equal to that of an inlet of a cooling fixture adapted to define the shape and dimensions of the final profile to be obtained and having substantially the shape of the die, wherein a space free from material is produced inside the profile during extrusion through said section, whereafter the material thus extruded is constrained, immediately at an outlet of said die section and substantially in the prolongation of the extrusion axis, in an elongate cooled shaping space open at both ends on said extrusion axis and having an outlet section identical with the section of the end product to be obtained, said shaping space being divided into at least two portions separated from one another by a free space, the first portion not exceeding a few centimetres in length and being directly in contact with the die outlet, characterized in that the outlet cross-section of the first portion of the cooling fixture is identical with the inlet cross-section of the second portion of the cooling fixture, said sections substantially corresponding to the section of the profile to be obtained.

2. Use of the device according to Claim 1 for the production of plastics profiles with a lightened core and having a dense surface of density substantially close to that of the base unexpanded plastics.

**Patentansprüche**

1. Vorrichtung zur Extrusion ausdehnbarer Kunststoffe, die es ermöglicht, eine Zusammensetzung in wenigstens unvollständig expandiertem Zustand durch einen Abschnitt einer Düse zu extrudieren, der eine Oberfläche aufweist, die im wesentlichen gleich derjenigen der Eingangsöffnung einer Ausdehnvorrichtung zur Festlegung der Form und der Abmessungen des herzustellenden endgültigen Profils ist und der in etwa die Form der letzteren aufweist, unter Schaffung eines materialfreien Raums im Inneren des Profils im Verlauf der Extrusion durch diesen Abschnitt und anschließendes Entspannen des auf diese Weise extrudierten Stoffs direkt beim Austritt aus diesem Abschnitt der Düse und etwa in Verlängerung der Extrusionsachse, in einen Ausdehnungsraum hinein, der gekühlt ist und an seinen beiden Enden zur Extrusionsachse hin offen ist und am Ausgang einen Querschnitt aufweist, der demjenigen des herzustellenden Endprodukts identisch ist, wobei dieser Ausdehnungsraum in wenigstens zwei getrennte Abschnitte unterteilt ist, die voneinander durch einen freien Zwischenraum getrennt sind, wobei der erste Abschnitt eine Länge von nicht mehr als einigen Zentimetern aufweist und im direkten Kontakt mit dem Ausgang der Düse steht, dadurch gekennzeichnet, daß der gerade Austrittsabschnitt des ersten Teils der Ausdehnvorrichtung identisch ist mit dem geraden Eintrittsabschnitt des zweiten Teils der Ausdehnvorrichtung, wobei diese Abschnitte in etwa dem Querschnitt des herzustellenden Profils entsprechen.

2. Verwendung einer Vorrichtung gemäß Anspruch 1 zur Herstellung von Profilen aus Kunststoff mit einem Leichtkern, die eine dichte Oberfläche mit einer Dichte aufweisen, die im wesentlichen nahe derjenigen des nicht ausgedehnten Ausgangskunststoffs liegt.

EP 0 202 982 B1